# EUROPÄISCHE PATENTSCHRIFT

(11) **EP 3 883 357 B1**
(45) Veröffentlichungstag und Bekanntmachung des Hinweises auf die Patenterteilung: **08.01.2025**
(21) Anmeldenummer: 19809016.9
(22) Anmeldetag: 19.11.2019
(51) Int. Cl.: A01B 13/14, A01B 35/06, A01B 23/02

(54) **BODENBEARBEITUNGSMASCHINE**
SOIL CULTIVATION MACHINE
MACHINE DE TRAVAIL DU SOL

(30) Priorität: 23.11.2018 DE 202018106689 U
(43) Veröffentlichungstag der Anmeldung: 29.09.2021
(73) Patentinhaber: Popfinger, Michael, 85302 Gerolsbach (DE)
(72) Erfinder: Popfinger, Michael, 85302 Gerolsbach (DE)
(74) Vertreter: Eisenführ Speiser
(86) Internationale Anmeldenummer: PCT/EP2019/081757
(87) Internationale Veröffentlichungsnummer: WO 2020/104433

(56) Entgegenhaltungen:
- EP-A1- 3 248 449
- EP-A1- 3 248 449
- GB-A- 2 033 192
- GB-A- 2 033 192
- JP-A- 2007 061 082
- JP-A- 2007 061 082

## Beschreibung

### GEBIET DER ERFINDUNG

Die vorliegende Erfindung bezieht sich auf eine Bodenbearbeitungsmaschine zum Bearbeiten eines Bodens, insbesondere auf eine Bodenbearbeitungsmaschine zur hocheffizienten Bearbeitung von landwirtschaftlichen Flächen.

### HINTERGRUND

Eine Bodenbearbeitung im Rahmen der vorliegenden Erfindung dient zum einen dazu, einen zum Anbau von Pflanzen genutzten Boden aufzulockern, da Pflanzen Sauerstoff, Wasser, Wärme und Licht benötigen, um optimal zu wachsen und einen hohen Ertrag bei der Ernte einzubringen. Zum anderen werden Konkurrenzpflanzen (Unkraut) beseitigt, da diese den Ertrag mindern.

Hierbei werden zwei Arten von Bodenbearbeitung unterschieden: Bodenbearbeitung mit Unkrautvernichtungsmitteln und Bodenbearbeitung ohne Unkrautvernichtungsmittel.

Bei der Bodenbearbeitung mit Unkrautvernichtungsmitteln werden zunächst die bestehenden Konkurrenzpflanzen mit chemischen Unkrautvernichtungsmitteln abgespritzt. Anschließend wird der Boden mittels eines sog. Meißels gelockert und gelüftet, um die Oberfläche des Bodens auf die Aussaat vorzubereiten. Optional muss die Struktur des Bodens in einem zusätzlichen Arbeitsgang bearbeitet werden, bspw. geglättet werden. Somit werden zumindest zwei voneinander getrennte Arbeitsgänge benötigt, die zum einen erhöhte Kosten verursachen und zum anderen das Erdreich und/oder das Grundwasser mit chemischen Unkrautvernichtungsmitteln belasten.

Bei der Bodenbearbeitung ohne Unkrautvernichtungsmittel werden zunächst die Konkurrenzpflanzen mechanisch beseitigt, indem mittels einer sog. Schar der Boden leicht angehoben und die unerwünschten Pflanzen abgeschnitten werden. Die abgeschnittenen Konkurrenzpflanzen vertrocknen dabei an der Oberfläche. Zum Lüften und Lockern des Bodens wird eine zweite Überfahrt benötigt, bspw. durch o.g. Meißel. Zur vollständigen Bekämpfung der unerwünschten Pflanzen müssen vor der Saat zusätzlich die Keimlinge dieser Pflanzen bekämpft werden.

Somit werden aktuell bei der Bodenbearbeitung mindestens drei Überfahrten mit unterschiedlichen Bearbeitungsmaschinen benötigt, um anschließend säen zu können.

GB 2 033 192 A offenbart eine Kultivierungsvorrichtung mit Zinkengruppen mit flachen, vorlaufenden Zinken, mittleren Meißelzinken und tiefschneidenden Unterbodenbearbeitungszinken zur Bearbeitung des Bodens in unterschiedlichen Tiefen.

JP 2007 061082 A offenbart eine Bodenbearbeitungsmaschine mit Meißeln und Bodenpflugkörpern, die, bezogen auf die Bewegungsrichtung, jeweils versetzt hintereinander angeordnet sind. Die Meißel bestehen aus einer konvex geformten Platte, die wiederum eine Einstechspitze aufweist. Die Bodenpflugkörper bestehen aus einer geraden, konkav geformten Platte und einem Federzinken.

EP 3 248 449 A1 offenbart ein landwirtschaftliches Bodenbearbeitungsgerät. An einem Rahmen sind Federzinken befestigt. Der Federzinken ist in zumindest fünf Abschnitte unterteilbar, wobei ein erster Abschnitt durch einen Einspannabschnitt gebildet ist, welcher auf einer Oberseite oder auf einer Unterseite eines Rahmenträgers des Rahmens aufliegt und befestigbar ist, wobei ein zweiter Abschnitt durch wenigstens eine Federwindung gebildet ist, welche wenigstens eine Federwindung des Federzinkens in Bewegungsrichtung des Bodenbearbeitungsgeräts frontseitig des Rahmenträgers angeordnet ist, an dem der Federzinken befestigt bzw. befestigbar ist, wobei ein dritter Abschnitt durch einen Auflageabschnitt gebildet ist, welcher in etwa horizontal über die Oberseite des Rahmenträgers geführt ist, wobei ein vierter Abschnitt durch einen bogen- oder sichelförmigen Verlauf des Federzinkens gebildet ist, und wobei ein fünfter Abschnitt durch ein in Fahrtrichtung schräg nach unten und vorne weisendes freies Ende gebildet ist, das als Befestigungsabschnitt für ein den Boden furchendes Eingriffselement dient.

In Zeiten des Klimawandels und erhöhter Sonneneinstrahlung ist ein ausgeglichener Wasserhaushalt des Bodens von großer Bedeutung. Bei jeder Überfahrt zur Bodenbearbeitung wird jedoch der Wassergehalt verringert.

Dementsprechend sollte die Bodenbearbeitung auf ein Minimum an Überfahrten reduziert werden. Des Weiteren führen mehrere Bearbeitungsgänge zu einem enormen Energieaufwand, höheren Kosten pro Hektar, Bodenerosionen und Wasserverlust. Bei jeder Bodenbearbeitung, also bei jeder Überfahrt, werden durch das mechanische Bearbeiten des Bodens, die Ernterückstände der Vorfrucht zerbrochen, zerkleinert und in die entsprechende Bearbeitungstiefe vermischt. Bei starken Unwettern und Niederschlägen, die im Zuge des Klimawandels auftreten, braucht man jedoch diese Rückstände an der Bodenoberfläche, damit das Wasser nicht wegläuft, sondern gestoppt wird, um an Ort und Stelle zu versickern.

Die Aufgabe der vorliegenden Erfindung ist es, eine Bodenbearbeitungsmaschine bereitzustellen, die in der Lage ist, die oben genannten Probleme zu lösen.

### ZUSAMMENFASSUNG DER ERFINDUNG

Die Aufgabe wird gelöst, indem eine Bodenbearbeitungsmaschine gemäß der vorliegenden Erfindung vorgeschlagen wird, die durch den unabhängigen Patentanspruch 1 definiert ist. Weitere vorteilhafte Ausgestaltungen der Erfindung sind in den abhängigen Patentansprüchen angegeben.

Nach einem ersten Aspekt der vorliegenden Erfindung enthält eine Bodenbearbeitungsmaschine zum Bearbeiten eines Bodens einen in eine Bewegungsrichtung bewegbaren Rahmen mit zumindest einer an dem Rahmen angebrachten Bodenbearbeitungseinrichtung, die wenigstens eine Schar und mindestens einen, bezogen auf die Bewegungsrichtung des Rahmens, hinter der Schar angeordneten Meißel aufweist, wobei die wenigstens eine Schar aus einem in Bewegungsrichtung konvex gebogenen Flachmaterial mit einer im Wesentlichen horizontal verlaufenden Schneidkante und der wenigstens eine Meißel aus einem in Bewegungsrichtung konvex gebogenen Flachmaterial gebildet ist.

Die Bewegungsrichtung des Rahmens entspricht hierbei zugleich zumindest annähernd der Bearbeitungsrichtung der horizontal verlaufenden Schneidkante der Schar. Die Bodenbearbeitungsmaschine nach dem ersten Aspekt der vorliegenden Erfindung ist in der Lage, den zu bewirtschaftenden Boden mit nur einer Überfahrt der Bodenbearbeitungsmaschine vollständig zu bearbeiten, wobei die Bodenbearbeitungsmaschine hierbei sowohl Konkurrenzpflanzen abschneidet und damit vernichtet als auch den Boden lockert und lüftet. Dabei kann das Unkraut an der Oberfläche vertrocknen und vorhandene Ernterückstände der Vorfrucht verhindern ein Abschwemmen des Bodens, d.h. Bodenerosionen.

Gemäß dem Gegenstand von Anspruch 1 ist der Meißel, bezogen auf die Bewegungsrichtung, fluchtend hinter der Schar angeordnet Dies ermöglicht zunächst das Abschneiden der Konkurrenzpflanzen sowie das Anheben des Bodens durch die Schar und anschließend das Lockern sowie Lüften des Bodens durch den Meißel. Besonders vorteilhaft ist hierbei die Anordnung der Schar und des Meißels als Bodenbearbeitungseinrichtung, die es ermöglicht, den Boden mit nur einer Überfahrt der Bodenbearbeitungsmaschine, vorzugsweise bestehend aus mehreren Bodenbearbeitungseinrichtungen, so zu bearbeiten, dass dieser bereit zum Aussäen ist.

In einigen Ausführungsformen liegt der Abstand zwischen Meißel und Schar in Bewegungsrichtung zumindest annähernd zwischen 5 cm und 55 cm. Der Abstand zwischen Meißel und Schar ergibt sich aus den verschiedenen Einsatzbedingungen, der je nach Gegebenheit des Bodens angepasst werden kann, um so Komplikationen, wie bspw. eine Anstauung von Ernterückständen oder Unkraut, zu vermeiden.

In einigen Ausführungsformen sind an der Bodenbearbeitungsmaschine mehrere Bodenbearbeitungseinrichtungen an dem Rahmen vorgesehen, die, bezogen auf die Bewegungsrichtung, nebeneinander und/oder versetzt hintereinander angeordnet sind. Dies ermöglicht eine Bearbeitung der gesamten mit der Bodenbearbeitungsmaschine überfahrenen Fläche in einer einzigen Überfahrt.

In einigen Ausführungsformen sind die Schar und/oder der Meißel gegenüber dem Rahmen höhenverstellbar. Je nach Bodenbeschaffenheit werden andere Anforderungen an die Bodenbearbeitungsmaschine gestellt, die durch höhenverstellbare Meißel und Scharen überwunden werden können.

In einigen Ausführungsformen ist die Schar mittels einer im Wesentlichen senkrecht zum Rahmen ausgerichteten Befestigungsstange am Rahmen der Bodenbearbeitungsmaschine angebracht. In einigen Ausführungsformen ist der Meißel an einer im Wesentlichen senkrecht zum Rahmen ausgerichteten Befestigungsstange angebracht.

In einigen Ausführungsformen ist der Meißel federnd an dem Rahmen und/oder der Schar, vorzugsweise an einer Befestigungsstange der Schar zum Befestigen der Schar am Rahmen angebracht. Dies erhöht die Lebensdauer des Meißels, da dieser bspw. im Boden liegenden Steinen federnd ausweichen kann.

In einigen Ausführungsformen ist der Meißel an einem Federzinken angebracht, der mit seinem einen Ende an dem Rahmen und/oder der Schar bzw. der Befestigungsstange der Schar angebracht ist und dessen freies Ende eine Einstechspitze des Meißels aufweist. Durch diese Anordnung ist gewährleistet, dass der Boden ausreichend aufgelockert wird und dass der Meißel bspw. im Boden liegenden Steinen federnd ausweichen kann. Je nach Beschaffenheit des Bodens kann eine härtere oder weichere Ausführung des Federzinkens notwendig sein. Gegebenenfalls kann dies einstellbar sein.

In einigen Ausführungsformen ist der Federzinken zumindest annähernd S-förmig gebogen. Durch die annähernd S-förmige Gestaltung des Federzinkens werden die Federeigenschaften des Meißels erzielt.

In einigen Ausführungsformen weist die Schneidkante der Schar zu der Unterseite des Rahmens einen ersten Abstand und die Einstechspitze des Meißels zu der Unterseite des Rahmens einen zweiten Abstand auf, und wobei der erste Abstand kleiner als der zweite Abstand ist. Dies hat zur Folge, dass die Konkurrenzpflanzen zunächst in einer niedrigen Höhe abgeschnitten werden und anschließend mittels des Meißels zur Oberfläche befördert werden, wo das Unkraut vertrocknet.

In einigen Ausführungsformen ist die Schar in der Lage, den Boden in einer Tiefe von 1 cm bis 10 cm, vorzugsweise in einer Tiefe von 3 cm, zu bearbeiten.

In einigen Ausführungsformen ist der Meißel in der Lage, den Boden in einer Tiefe von 5 cm bis 20 cm, vorzugsweise in einer Tiefe von 12 cm, zu bearbeiten.

In einigen Ausführungsformen ist seitlich an der Schar jeweils zumindest ein Hebeeisen angebracht. Das seitlich an der Schar angebrachte Hebeeisen beeinflusst den Gutfluss des Bodens in der Art und Weise, dass Ernterückstände und Unkraut noch mehr angehoben werden. Daraus resultiert der Vorteil, dass noch mehr Freiraum für den dahinterliegenden Meißel geschaffen wird, der in verschiedenen Einsatzbedingungen, wie bspw. bei unterschiedlichen Bodenbeschaffenheiten, nötig ist.

Gemäß dem Gegenstand von Anspruch 1 ist die Schar als Gänsefußschar ausgebildet. Die Gänsefußschar ist in der Lage, den Boden in einer voreingestellten Bearbeitungstiefe anzuheben, um Luft und Wärme in den Boden einzubringen, und zusätzlich Unkraut entlang der Schneidkante abzuschneiden.

In einigen Ausführungsformen ist, bezogen auf die Bewegungsrichtung, hinter dem Rahmen wenigstens eine Schneidwalze angebracht, die mindestens ein, vorzugsweise mehrere versetzt angeordnete Messer aufweist. Die Schneidwalze dient zur Beseitigung eventueller Unebenheiten des Bodens, die durch die Bearbeitung mit der Bodenbearbeitungsmaschine entstehen. Somit wird durch den Einsatz einer Schneidwalze ein gerades und rückverfestigtes Saatbeet erzeugt.

In einigen Ausführungsformen ist der Rahmen mit einer Kupplungseinrichtung zum Ankuppeln einer Zugmaschine versehen.

In einigen Ausführungsformen ist der Rahmen aus Hohlprofilen gebildet. Die Hohlprofile werden hierbei verwendet, um das Gewicht der Bodenbearbeitungsmaschine möglichst gering zu halten.

### BESCHREIBUNG DER ZEICHNUNGEN

- Fig. 1: zeigt eine perspektivische Ansicht einer Bodenbearbeitungsmaschine nach einer Ausführungsform der vorliegenden Erfindung,
- Fig. 2: zeigt eine perspektivische Ansicht einer Bodenbearbeitungseinrichtung nach einer Ausführungsform der vorliegenden Erfindung,
- Fig. 3: zeigt eine Seitenansicht der Bodenbearbeitungseinrichtung aus Fig. 2,
- Fig. 4: zeigt eine perspektivische Ansicht einer Bodenbearbeitungseinrichtung nach einer weiteren Ausführungsform der vorliegenden Erfindung, und
- Fig. 5: zeigt eine Seitenansicht der Bodenbearbeitungseinrichtung aus Fig. 4.

### DETAILLIERTE BESCHREIBUNG

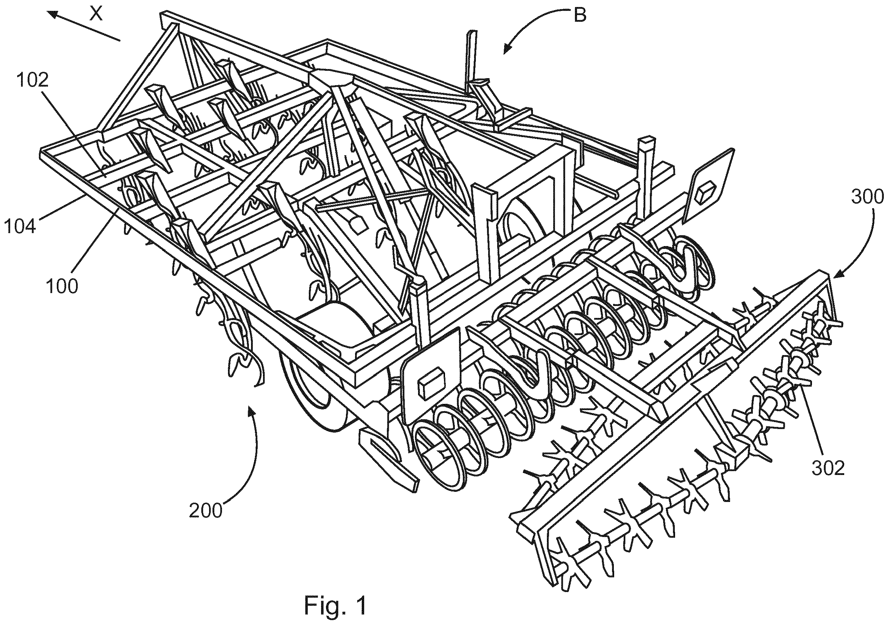

Figur 1 zeigt eine perspektivische Ansicht einer Bodenbearbeitungsmaschine B zum Bearbeiten eines vorzugsweise landwirtschaftlich genutzten Bodens gemäß der vorliegenden Erfindung. Dabei besteht die Bodenbearbeitungsmaschine B aus einem in der Bearbeitungsposition horizontal ausgerichteten, vorzugsweise rechteckigen Rahmen 100, der aus vorzugsweise rechteckförmigen Hohlprofilen aus weiter vorzugsweise Stahl angefertigt ist. An dem Rahmen 100 sind Querstreben 102 vorgesehen, die ebenfalls aus vorzugsweise rechteckförmigen Hohlprofilen aus weiter vorzugsweise Stahl hergestellt sind. Die Querstreben 102 dienen zum Anbringen von zumindest einer Bodenbearbeitungseinrichtung 200.

Des Weiteren wird die Bodenbearbeitungsmaschine B bspw. mittels einer Zugmaschine in eine Bewegungsrichtung X fortbewegt. Hierfür sind am Rahmen 100 der Bodenbearbeitungsmaschine B bspw. Räder angebracht, wobei auch andere Mittel, wie bspw. Kufen oder dergleichen, denkbar sind. Darüber hinaus ist an dem Rahmen 100 eine Kupplungseinrichtung zum Ankuppeln der Bodenbearbeitungseinrichtung B an einer Zugmaschine vorgesehen.

Vorteilhafterweise sind mehrere Bodenbearbeitungseinrichtungen 200 nebeneinander und/oder versetzt hintereinander, bezogen auf die Bewegungsrichtung X, an dem Rahmen 100 angeordnet. Dadurch kann mit nur einer Überfahrt die gesamte mit der Bodenbearbeitungsmaschine B überfahrene Fläche bearbeitet werden.

Optional kann in Bewegungsrichtung X hinter dem Rahmen 100 der Bodenbearbeitungsmaschine B eine Schneidwalze 300 angebracht werden, die mit versetzt angeordneten, rotierenden Messern 302 Unebenheiten an der Bodenoberfläche beseitigt. Dabei wird die Schneidwalze 300 mit der Fahrtgeschwindigkeit angetrieben und ist vorzugsweise freischwingend, wodurch kein zusätzlicher Bodendruck erzeugt wird.

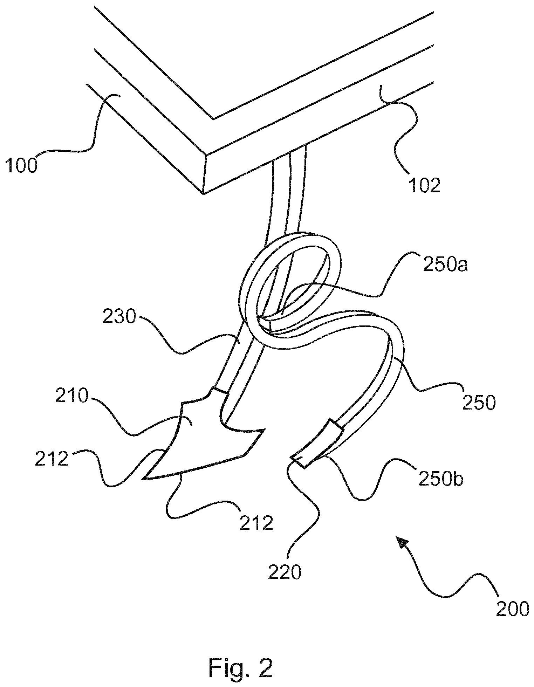

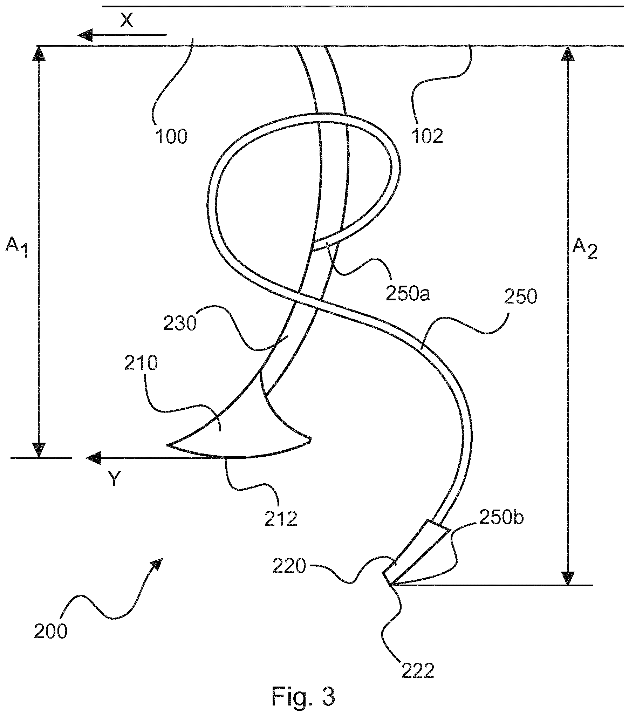

Figur 2 und Figur 3 zeigen eine perspektivische Ansicht sowie eine Seitenansicht einer Bodenbearbeitungseinrichtung 200 gemäß einer Ausführungsform der vorliegenden Erfindung. Die Bodenbearbeitungseinrichtung 200 enthält hierbei eine Schar 210, die die Gestalt eines Gänsefußes aufweist und die aus einem zumindest annähernd konvex gebogenen Flachmaterial gebildet ist. Zudem weist die Schar 210 eine im Wesentlichen horizontal verlaufende Schneidkante 212 zum Abschneiden von Unkraut auf, wobei diese Schneidkante 212 eine Wirkkante in Bewegungsrichtung X bildet. Die Bewegungsrichtung X des Rahmens entspricht hierbei zugleich zumindest annähernd der Bearbeitungsrichtung Y der horizontal verlaufenden Schneidkante 212 der Schar 210.

Des Weiteren umfasst die Bodenbearbeitungseinrichtung 200 einen Meißel 220, der wiederum aus einem, bezogen auf die Bewegungsrichtung X, zumindest annähernd konvex gebogenen Flachmaterial gebildet ist. Sowohl der Meißel 220 als auch die Schar 210 bestehen aus einem starren, widerständigen Material, wie z.B. Stahl.

Die Schar 210 ist hierbei mittels einer im Wesentlichen senkrecht zum Rahmen 100 ausgerichteten Befestigungsstange 230 an einer Querstrebe 102 des Rahmens 100 der Bodenbearbeitungsmaschine B angebracht. Dabei bearbeitet die Schar 210 den Boden in einer ersten Bearbeitungstiefe, die zwischen 1 cm bis 10 cm im Boden liegt, vorzugsweise beträgt die erste Bearbeitungstiefe 3 cm. Das in Längsrichtung gebogene Flachmaterial der Schar 210 hebt den Boden leicht an und schneidet gleichzeitig mittels der horizontalen Schneidkante 212 zu beseitigende Konkurrenzpflanzen ab.

Je nach Beschaffenheit des Bodens können unterschiedliche Eintauchtiefen des Meißels 220 bzw. der Schar 210 vorteilhaft sein. Daher sind die Schar 21 0 als auch der Meißel 220 gegenüber dem Rahmen 100 getrennt voneinander höhenverstellbar ausgestaltet.

In einer Ausführungsform der vorliegenden Erfindung ist ein Meißel 220 an einem Ende eines Befestigungsmittels angebracht, wobei das Befestigungsmittel des Meißels 220 einerseits ein Federzinken 250 oder andererseits eine Befestigungsstange 240 sein kann. Dabei ist in der vorliegenden Ausführungsform das Befestigungsmittel ein Federzinken 250, wobei ein Ende 250a des Federzinkens 250 an dem Rahmen 100 und/oder der Befestigungsstange 230 der Schar 210 angebracht ist und dessen freies Ende 250b eine Einstechspitze 222 des Meißels 220 aufweist. Der Federzinken 250 ist im Wesentlichen so S-förmig gebogen, dass zum einen eine federnde Wirkung in Bewegungsrichtung X gegeben ist und zum anderen, dass der an einem Ende des Federzinkens 250 angebrachte Meißel 220 in einem Winkel von 20° bis 70°, vorzugsweise in einem Winkel von ungefähr 45° zu der Senkrechten des Rahmens 100 der Bodenbearbeitungsmaschine B ausgerichtet ist. Durch diese Anordnung ist gewährleistet, dass der Boden ausreichend aufgelockert wird und dass der Meißel 220 bspw. im Boden liegenden Steinen federnd ausweichen kann. Optional kann bei Überbelastung der Bodenbearbeitungseinrichtung 200 diese komplett in Bewegungsrichtung X des Rahmens 100 nach hinten weggeklappt werden.

Zudem ist der Meißel 220 in Bewegungsrichtung X des Rahmens 100 fluchtend hinter der Schar 210 angeordnet. Je nach Beschaffenheit des Bodens kann eine härtere oder weichere Ausführung des Federzinkens 250 notwendig sein, bspw. kann der Federzinken 250 durch eine im Wesentlichen senkrecht zum Rahmen 100 ausgerichtete, annähernd starre Befestigungsstange 240 ausgetauscht werden.

Hierbei können der Federzinken 250 als auch die Befestigungsstange 240 des Meißels 220 an der Schar 210 und/oder auch an dem Rahmen 100 der Bodenbearbeitungsmaschine B befestigt werden.

Die Schneid- bzw. Wirkkante 212 der Schar 210 und die Unterseite 104 des Rahmens 100 weisen einen ersten Abstand A₁ zueinander auf, und die Einstechspitze 222 des Meißels 220 und die Unterseite 104 des Rahmens 100 weisen einen zweiten Abstand A₂ zueinander auf, wobei der erste Abstand A₁ kleiner als der zweite Abstand A₂ ist. Somit taucht der Meißel 220 vorzugsweise tiefer in den Boden ein als die Schar 210.

Gemäß einer Ausführungsform der vorliegenden Erfindung bearbeitet die Schar 210 den Boden in einer Tiefe von 1 cm bis 10 cm, vorzugsweise in einer Tiefe von 3 cm. Der Meißel 220 hingegen bearbeitet den Boden in einer Tiefe von 5 cm bis 20 cm, vorzugsweise in einer Tiefe von 12 cm.

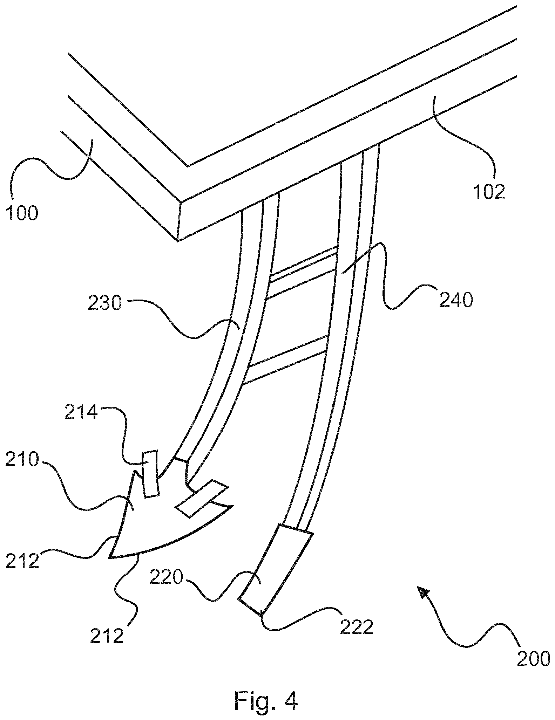

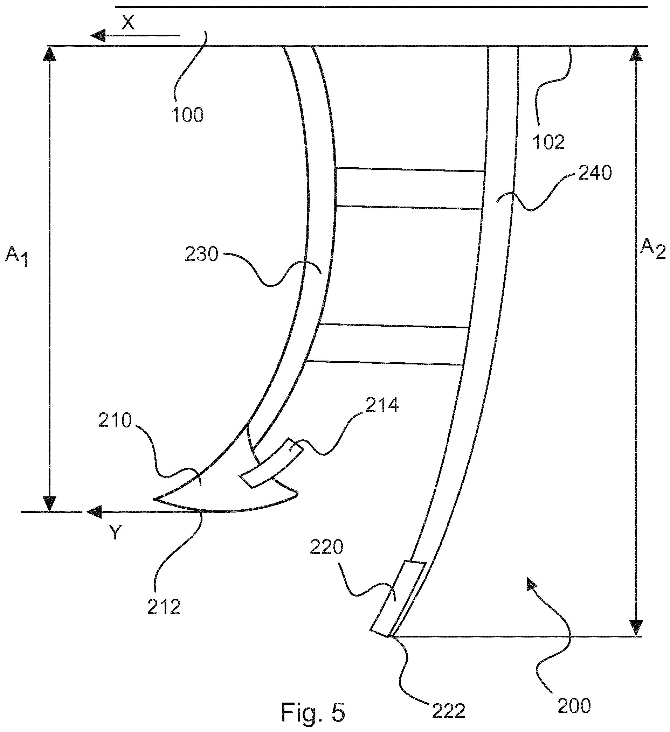

Zudem können optional Hebeeisen 214 seitlich an der Schar 210 angebracht werden, wie dies in der perspektivischen Ansicht der Figur 4 und der Seitenansicht der Figur 5 gezeigt wird. Diese Hebeeisen 214 bestehen ebenfalls aus einem Flachmaterial und sind so ausgelegt, dass sie den Boden und somit auch Ernterückstände und Unkraut noch höher anheben. Dies erleichtert dem in Bearbeitungsrichtung Y hinter der Schar 210 liegenden Meißel 220, das Erdreich aufzulockern. Des Weiteren legt sich die mittels der Schar 210 angehobene Erdschicht unmittelbar nach der Bearbeitung auf den mit Sauerstoff und Wärme angereicherten Boden.

Vorteilhafterweise ist die Schar 210 als Gänsefußschar ausgebildet, nichtsdestotrotz sind auch andere Scharformen denkbar, wie bspw. eine Doppelherzschar oder eine Flügelschar.

### BEZUGSZEICHENLISTE

- B: Bodenbearbeitungsmaschine
- X: Bewegungsrichtung
- Y: Bearbeitungsrichtung
- A₁, A₂: erster und zweiter Abstand
- 100: Rahmen
- 102: Querstreben
- 104: Unterseite des Rahmens
- 200: Bodenbearbeitungseinrichtung
- 210: Schar
- 212: Schneidkante
- 214: Hebeeisen
- 220: Meißel
- 222: Einstechspitze
- 230: Befestigungsstange
- 240: Befestigungsstange
- 250: Federzinken
- 250a, 250b: Enden des Federzinkens
- 300: Schneidwalze
- 302: Messer der Schneidwalze

## Patentansprüche

1. Bodenbearbeitungsmaschine (B) zum Bearbeiten eines Bodens, enthaltend einen in eine Bewegungsrichtung (X) bewegbaren Rahmen (100) mit zumindest einer an dem Rahmen (100) angebrachten Bodenbearbeitungseinrichtung (200), die wenigstens eine Schar (210) und mindestens einen, bezogen auf die Bewegungsrichtung (X) des Rahmens (100), hinter der Schar (210) angeordneten Meißel (220) aufweist,
wobei die wenigstens eine Schar (210), die als Gänsefußschar ausgebildet ist, aus einem in Bewegungsrichtung (X) konvex gebogenen Flachmaterial mit einer im Wesentlichen horizontal verlaufenden Schneidkante (212) zum Abschneiden von Unkraut, und der wenigstens eine Meißel (220) aus einem in Bewegungsrichtung (X) konvex gebogenen Flachmaterial gebildet ist, und
wobei der Meißel (220), bezogen auf die Bewegungsrichtung (X), fluchtend hinter der Schar (210) angeordnet ist.

2. Bodenbearbeitungsmaschine nach Anspruch 1, wobei der Abstand zwischen Meißel (220) und Schar (210) in Bewegungsrichtung (X) zumindest annähernd zwischen 5 cm und 55 cm liegt.

3. Bodenbearbeitungsmaschine nach einem der Ansprüche 1 oder 2, wobei mehrere Bodenbearbeitungseinrichtungen (200) an dem Rahmen (100) vorgesehen sind, die, bezogen auf die Bewegungsrichtung (X), nebeneinander und/oder versetzt hintereinander angeordnet sind.

4. Bodenbearbeitungsmaschine nach einem der Ansprüche 1 bis 3, wobei die Schar (210) und/oder der Meißel (220) gegenüber dem Rahmen (100) höhenverstellbar sind.

5. Bodenbearbeitungsmaschine nach einem der Ansprüche 1 bis 4, wobei die Schar (210) mittels einer im Wesentlichen senkrecht zum Rahmen (100) ausgerichteten Befestigungsstange (230) am Rahmen (100) angebracht ist.

6. Bodenbearbeitungsmaschine nach einem der Ansprüche 1 bis 5, wobei der Meißel (220) an einer im Wesentlichen senkrecht zum Rahmen (100) ausgerichteten Befestigungsstange (240) angebracht ist.

7. Bodenbearbeitungsmaschine nach einem der Ansprüche 1 bis 6, wobei der Meißel (220) federnd an dem Rahmen (100) und/oder der Schar (210), vorzugsweise an einer Befestigungsstange (230) der Schar (210) zum Anbringen der Schar (210) an dem Rahmen (100) angebracht ist.

8. Bodenbearbeitungsmaschine nach Anspruch 7, wobei der Meißel (220) an einem Federzinken (250) angebracht ist, der mit seinem einen Ende (250a) an dem Rahmen (100) und/oder der Befestigungsstange (230) der Schar (210) angebracht ist und dessen freies Ende (250b) eine Einstechspitze (222) des Meißels (220) aufweist.

9. Bodenbearbeitungsmaschine nach Anspruch 8, wobei der Federzinken (250) zumindest annährend S-förmig gebogen ist.

10. Bodenbearbeitungsmaschine nach einem der Ansprüche 1 bis 9, wobei die Schneidkante (212) der Schar (210) zu der Unterseite (104) des Rahmens (100) einen ersten Abstand (A₁) und die Einstechspitze (222) des Meißels (220) zu der Unterseite (104) des Rahmens (100) einen zweiten Abstand (A₂) aufweist, und wobei der erste Abstand (A₁) kleiner als der zweite Abstand (A₂) ist.

11. Bodenbearbeitungsmaschine nach einem der Ansprüche 1 bis 10, wobei die Schar (210) in der Lage ist, den Boden in einer Tiefe von 1 cm bis 10 cm, vorzugsweise in einer Tiefe von 3 cm, zu bearbeiten.

12. Bodenbearbeitungsmaschine nach einem der Ansprüche 1 bis 11, wobei der Meißel (220) in der Lage ist, den Boden in einer Tiefe von 5 cm bis 20 cm, vorzugsweise in einer Tiefe von 12 cm, zu bearbeiten.

13. Bodenbearbeitungsmaschine nach einem der Ansprüche 1 bis 12, wobei seitlich an der Schar (210) jeweils zumindest ein Hebeeisen (214) angebracht ist.

## Claims

1. A soil cultivation machine (B) for cultivating soil, comprising a frame (100) that is movable in a moving direction (X) and has at least one soil cultivation device (200) which is attached to the frame (100) and has at least one coulter (210) and at least one chisel (220) arranged behind the coulter (210) in relation to the moving direction (X) of the frame (100),
wherein the at least one coulter (210), which is designed as a goose-foot coulter, is formed from a flat material curved convexly in the moving direction (X) and having a substantially horizontally extending cutting edge (212) for cutting weeds, and the at least one chisel (220) is formed from a flat material curved convexly in the moving direction (X), and
wherein the chisel (220) is arranged in alignment behind the coulter (210) in relation to the moving direction (X).

2. The soil cultivation machine according to claim 1, wherein the distance between the chisel (220) and the coulter (210) in the moving direction (X) is at least approximately between 5 cm and 55 cm.

3. The soil cultivation machine according to one of the claims 1 or 2, wherein a plurality of soil cultivation devices (200) are provided on the frame (100), which are arranged next to one another and/or staggered one behind the other with respect to the moving direction (X).

4. The soil cultivation machine according to one of the claims 1 to 3, wherein the coulter (210) and/or the chisel (220) are/is adjustable in height relative to the frame (100).

5. The soil cultivation machine according to one of the claims 1 to 4, wherein the coulter (210) is attached to the frame (100) by means of a mounting rod (230) aligned essentially perpendicular to the frame (100).

6. The soil cultivation machine according to one of the claims 1 to 5, wherein the chisel (220) is attached to a mounting rod (240) aligned substantially perpendicular to the frame (100).

7. The soil cultivating machine according to one of the claims 1 to 6, wherein the chisel (220) is resiliently attached to the frame (100) and/or the coulter (210), preferably to an attachment rod (230) of the coulter (210) for attaching the coulter (210) to the frame (100).

8. The soil cultivation machine according to claim 7, wherein the chisel (220) is attached to a spring tine (250), which is attached at its one end (250a) to the frame (100) and/or the mounting rod (230) of the coulter (210) and the free end (250b) of which comprises a piercing point (222) of the chisel (220).

9. The soil cultivation machine according to claim 8, wherein the spring tine (250) is bent at least approximately in an S-shape.

10. The soil cultivation machine according to one of the claims 1 to 9, wherein the cutting edge (212) of the coulter (210) has a first distance (A₁) from the lower side (104) of the frame (100) and the piercing point (222) of the chisel (220) has a second distance (A₂) from the lower side (104) of the frame (100), and wherein the first distance (A₁) is smaller than the second distance (A₂).

11. The soil cultivation machine according to one of the claims 1 to 10, wherein the coulter (210) is capable of cultivating the soil at a depth of 1 cm to 10 cm, preferably at a depth of 3 cm.

12. The soil cultivation machine according to one of the claims 1 to 11, wherein the chisel (220) is capable of cultivating the soil at a depth of 5 cm to 20 cm, preferably at a depth of 12 cm.

13. The soil cultivation machine according to one of the claims 1 to 12, wherein at least one lifting iron (214) is attached to the side of each coulter (210).

## Revendications

1. Machine de travail du sol (B) destinée à travailler un sol, contenant un cadre (100) pouvant être déplacé dans un sens de déplacement (X), présentant au moins un dispositif de travail du sol (200) monté sur le cadre (100), qui présente au moins un soc (210) et au moins un chisel (220) agencé derrière le soc (210) par rapport au sens de déplacement (X) du cadre (100),
ledit au moins un soc (210), qui est réalisé sous forme de soc en patte d'oie, étant formé en un matériau plat plié de manière convexe dans le sens de déplacement (X) et présentant une arête coupante (212) s'étendant de manière sensiblement horizontale, destinée à couper les mauvaises herbes, et ledit au moins un chisel (220) étant formé en un matériau plat plié de manière convexe dans le sens de déplacement (X) et
le chisel (220) étant agencé de manière alignée derrière le soc (210) par rapport au sens de déplacement (X).

2. Machine de travail du sol selon la revendication 1, la distance entre le chisel (220) et le soc (210) étant située au moins approximativement entre 5 cm et 55 cm dans le sens de déplacement (X).

3. Machine de travail du sol selon l'une des revendications 1 ou 2, plusieurs dispositifs de travail du sol (200) étant prévus sur le cadre (100), lesquels dispositifs sont agencés les uns à côté des autres et/ou de manière décalée les uns derrière les autres par rapport au sens de déplacement (X).

4. Machine de travail du sol selon l'une des revendications 1 à 3, le soc (210) et/ou le chisel (220) étant réglable(s) en hauteur par rapport au cadre (100).

5. Machine de travail du sol selon l'une des revendications 1 à 4, le soc (210) étant monté sur le cadre (100) au moyen d'une barre de fixation (230) orientée de manière sensiblement perpendiculaire au cadre (100).

6. Machine de travail du sol selon l'une des revendications 1 à 5, le chisel (220) étant monté sur une barre de fixation (240) orientée de manière sensiblement perpendiculaire au cadre (100).

7. Machine de travail du sol selon l'une des revendications 1 à 6, le chisel (220) étant monté avec un effet de ressort sur le cadre (100) et/ou sur le soc (210), de préférence sur une barre de fixation (230) du soc (210) destinée à monter le soc (210) sur le cadre (100).

8. Machine de travail du sol selon la revendication 7, le chisel (220) étant monté sur une dent à ressort (250) qui est montée à l'aide de l'une extrémité (250a) sur le cadre (100) et/ou sur la barre de fixation (230) du soc (210) et dont l'extrémité libre (250b) présente une pointe de pénétration (222) du chisel (220).

9. Machine travail du sol selon la revendication 8, la dent à ressort (250) étant pliée au moins approximativement en forme de S.

10. Machine travail du sol selon l'une des revendications 1 à 9, l'arête coupante (212) du soc (210) présentant une première distance (A₁) par rapport à la face inférieure (104) du cadre (100) et la pointe de pénétration (222) du chisel (220) présentant une deuxième distance (A₂) par rapport à la face inférieure (104) du cadre (100) et la première distance (A₁) étant inférieure à la deuxième distance (A₂).

11. Machine travail du sol selon l'une des revendications 1 à 10, le soc (210) étant en mesure de travailler le sol sur une profondeur de 1 cm à 10 cm, de préférence sur une profondeur de 3 cm.

12. Machine travail du sol selon l'une des revendications 1 à 11, le chisel (220) étant en mesure de travailler le sol sur une profondeur de 5 cm à 20 cm, de préférence sur une profondeur de 12 cm.

13. Machine de travail du sol selon l'une des revendications 1 à 12, au moins un fer de levage (214) étant à chaque fois monté latéralement sur le soc (210).
